# FASCICULE DE BREVET EUROPEEN

(11) **EP 0 395 506 B1**
(45) Date de publication et mention de la délivrance du brevet: **04.08.1993**
(21) Numéro de dépôt: 90401120.2
(22) Date de dépôt: 25.04.1990
(51) Int. Cl.: F16D 65/54, F16D 55/225, F16D 65/16, F16D 59/00, F16D 66/02, B66D 5/26

(54) **Frein à ouverture auto-réglable et compensateur d'usure**
Bremse mit selbsttätig nachstellender Öffnung und Verschleissnachstellvorrichtung
Brake with automatic gap-adjusting and wear-adjusting device

(30) Priorité: 28.04.1989 FR 8905708
(43) Date de publication de la demande: 31.10.1990
(73) Titulaire: SIME INDUSTRIE, F-18159 La Guerche (FR)
(72) Inventeur: Meneut, Jean-Claude, f-18150 germigny L'Exempt (FR); Eon, Christian, F-58640 Coulanges Les Nevers (FR)
(74) Mandataire: CABINET BONNET-THIRION

(56) Documents cités:
- DE-A- 3 542 937
- FR-A- 1 153 135
- FR-A- 1 247 707
- FR-A- 1 561 274
- FR-A- 2 136 791
- FR-A- 2 598 763
- US-A- 3 109 517

## Description

La présente invention concerne d'une manière générale les freins, le plus souvent à usage industriel, du genre comportant deux bras, qui, montés pivotants, sont aptes à appliquer des mâchoires de freinage à un quelconque organe à freiner, par exemple un disque, et un vérin, dont l'un quelconque des éléments constitutifs, corps ou piston, est attelé à l'un desdits bras, tandis que l'autre est attelé à l'autre de ceux-ci, avec, d'une part, en liaison avec l'une des chambres dudit vérin, des moyens de serrage propres à solliciter son piston dans un sens, et, en liaison avec l'autre desdites chambres, des moyens de desserrage propres à solliciter ledit piston dans le sens opposé au précédent.

Un frein de ce type se trouve notamment décrit dans la demande de brevet français qui, déposée le 16 Mai 1986 sous le No 86 07039, a été publiée sous le No 2.598.763.

Les moyens de desserrage y constituent un générateur de pression comportant, pour l'alimentation en fluide sous pression de la chambre correspondante du vérin, une pompe, qui est commandée, à la demande, par un moteur, et dont le refoulement est sous le contrôle d'un manocontact.

Lors d'un desserrage du frein, la chambre correspondante du vérin, jusque-là mise à la décharge, est alimentée en fluide sous pression par cette pompe, et la pression y monte progressivement, jusqu'à équilibrer l'effort antagoniste exercé par ailleurs par les moyens de serrage associés.

Le piston du vérin se déplace alors dans un sens correspondant à l'ouverture du frein, c'est-à-dire à son desserrage, jusqu'à son appui contre une butée.

A partir de cet instant, la pression dans la chambre concernée du vérin recommence à augmenter, jusqu'à une valeur maximale pour laquelle le manocontact commande l'arrêt de la pompe.

Mais, des fuites existant inévitablement dans le circuit correspondant, la pression dans cette chambre commence alors à baisser progressivement.

Lorsqu'elle atteint une valeur de seuil minimale, le manocontact relance la pompe.

Ainsi, le maintien ouvert de ce frein est assuré par un manocontact travaillant cycliquement, en différentiel de pression, entre une pression maximale et un seuil de relance.

Cette disposition a donné et peut encore donner satisfaction.

Mais elle présente des inconvénients, qui sont les suivants.

Tout d'abord, lorsqu'il doit être fiable, et c'est évidemment le cas en l'espèce, un manocontact est un organe relativement coûteux, qui grève le prix de revient de l'ensemble.

Cet inconvénient se trouve aggravé lorsque, pour un usage en atmosphère explosible, ce manocontact doit être anti-déflagrant.

En outre, la nécessité d'une venue en butée du piston du vérin implique un mouvement de celui-ci qui peut être redondant par rapport à ce qui est strictement nécessaire à l'ouverture du frein, et ce mouvement surperflu est inévitablement générateur d'une certaine usure pour le vérin.

De plus, du fait d'une sensibilité relativement faible, un manocontact impose que le seuil auquel doit se faire la relance de la pompe, qui est lié au différentiel de pression dans lequel doit travailler un tel manocontact, est relativement élevé.

Il en résulte une relance relativement fréquente du moteur, avec les conséquences, pour l'ensemble du générateur de pression concerné, d'une fatigue relativement grande et d'échauffements non négligeables, au détriment de la longévité.

Il en résulte, également, le risque d'une augmentation de la surpression sur le joint du piston du vérin, au détriment de la sécurité.

Enfin, il est nécessaire de prévoir par ailleurs des moyens propres à compenser systématiquement l'usure des garnitures de frottement portées par les mâchoires de freinage, faute de quoi la course de celles-ci à la fermeture, et donc le temps de réponse du frein, augmenterait de manière intempestive au fur et à mesure de cette usure.

A ce jour, ces moyens de compensation d'usure sont usuellement des moyens mécaniques, à cale et vis formant butée, qui, complexes, et donc relativement coûteux, suivent mal les éventuels déplacements axiaux du disque et/ou son éventuel voile, au risque d'un contact permanent des mâchoires de freinage avec ce disque, et, donc, au risque d'un échauffement intempestif de celui-ci, voire même d'une détérioration rédhibitoire de l'ensemble du frein.

La présente invention a d'une manière générale pour objet une disposition permettant d'éviter ces inconvénients et conduisant à d'autres avantages.

De manière plus précise, elle a pour objet un frein du genre comportant deux bras, qui, montés pivotants, sont aptes à appliquer des mâchoires de freinage à un quelconque organe à freiner, et un vérin, dont l'un quelconque des éléments constitutifs, corps ou piston, est attelé à l'un desdits bras tandis que l'autre est attelé à l'autre de ceux-ci, avec, d'une part, en liaison avec l'une des chambres dudit vérin, des moyens de serrage propres à solliciter son piston dans un sens, et, en liaison avec l'autre desdites chambres, des moyens de desserrage propres à solliciter ledit piston dans le sens opposé au précédent, ce frein étant d'une manière générale caractérisé en ce que lesdits moyens de desserrage sont sous le contrôle d'un contacteur électrique dont une partie est liée en mouvement à l'un des éléments constitutifs du vérin tandis que l'autre partie est liée en mouvement à l'autre desdits éléments, en ce que, sur la liaison en mouvement d'une desdites parties avec l'élément correspondant du vérin, interviennent des moyens de débattement à jeu, et en ce que la liaison en mouvement sur laquelle interviennent de tels moyens de débattement à jeu est une liaison à glissement contrôlée par des moyens de frottement, cette liaison en mouvement comportant une tige engagée à coulissement dans un palier solidaire de l'élément correspondant du vérin.

A l'ouverture, seul intervient d'abord, dans un premier temps, le jeu des moyens de débattement, cependant que le contacteur électrique demeure en position de fermeture.

Ce n'est que dans un deuxième temps que, le frein étant desserré, ce contacteur électrique passe en position d'ouverture fermeture, en arrêtant par là le moteur de la pompe.

Ainsi, outre que le contacteur électrique mis en oeuvre suivant l'invention est bien meilleur marché qu'un manocontact, il travaille avantageusement dans un différentiel de course, au lieu de travailler dans un différentiel de pression.

Le piston du vérin n'a donc pas besoin de venir en butée pour son entrée en action, et le seuil auquel il assure la relance de la pompe peut avantageusement être relativement bas.

Il résulte dès lors, globalement, de ce contacteur électrique les avantages suivants :
- une usure du vérin réduite, puisque le mouvement du piston de celui-ci se trouve limité à sa juste utilité,
- une usure du générateur de pression également amoindrie, puisque, eu égard au rapport des sections dans le corps du vérin et au rendement global de celui-ci, la pression maximale dans la chambre de ce vérin reliée au générateur de pression peut être réduite, et puisque, eu égard à la course réduite du piston du vérin, le temps de travail de ce vérin à cette pression maximale se trouve lui-même conjointement réduit.

Il résulte, également, du contacteur électrique suivant l'invention, les avantages suivants :
- possibilité d'une mobilité longitudinale d'ensemble du frein permettant à celui-ci de suivre au mieux les éventuels déplacements axiaux du disque et/ou son éventuel voile,
- insensibilité de l'ensemble à l'environnement, notamment en ce qui concerne la température, l'humidité relative, et la poussière,
- possibilité, en raison des liaisons mécaniques établies entre les divers constituants en jeu, d'un réglage et/ou d'un dépannage sans intervention sur la partie puissance,
- adaptation possible sur toute une gamme de freins de puissances différentes, sans réglage spécifique,
- limitation des risques de fuite entre les chambres du vérin, et donc diminution du risque de la génération d'un surcouple sur le frein,
- possibilité d'utiliser le contacteur électrique à d'autres fonctions, et/ou d'associer à la commande du frein plusieurs autres contacteurs électriques,
- utilisation possible d'un contacteur électrique du commerce, standard et bon marché, même dans le cas d'un contacteur électrique anti-déflagrant.

Le contacteur électrique mis en oeuvre suivant l'invention présente enfin l'avantage de permettre un auto-réglage, pré-calibré par le jeu des moyens de débattement à jeu, de l'ouverture du frein, et/ou de la course de son vérin, en constituant ainsi par lui-même des moyens propres à la compensation de l'usure des garnitures de frottement des mâchoires de serrage.

En effet, la liaison à glissement mise en oeuvre cède progressivement, au fur et à mesure de l'usure.

Ainsi se trouve avantageusement maintenue en permanence une course d'ouverture déterminée pour le frein, sans mise en oeuvre, pour ce faire, d'une quelconque cale ou de quelconques vis formant butée.

Il en résulte une économie de construction très sensible.

Lors d'un changement des garnitures de frottement, aucun réglage ni outillage particulier n'est en outre nécessaire.

En effet, le frein retrouve alors de lui-même au premier freinage sa configuration initiale.

Les caractéristiques et avantages de l'invention ressortiront d'ailleurs de la description qui va suivre, à titre d'exemple en référence aux dessins schématiques annexés sur lesquels :
la figure 1 est une vue en élévation coupe d'un frein suivant l'invention, pour la configuration de fermeture, c'est-à-dire de serrage, de ce frein ;
la figure 2 est une vue analogue à celle de la figure 1, pour la configuration d'ouverture, c'est-à-dire de desserrage, de ce frein ;
la figure 3 est un bloc diagramme relatif à la commande du moteur assurant la desserte de ce frein ;
la figure 4 reprend, à échelle supérieure, et en coupe axiale, le détail de la figure 1 repéré par un encart IV sur cette figure 1 ;
les figures 5 à 7 sont des vues qui, analogues à celle de la figure 4, illustrent le fonctionnement du frein suivant l'invention ;
la figure 8 est un diagramme de pression relatif à ce fonctionnement ;
la figure 9 est une vue en coupe axiale analogue à celle de la figure 4, pour une variante de réalisation.

Tel qu'illustré sur ces figures, le frein suivant l'invention est du genre comportant, d'une part, deux bras 10, qui, montés pivotants, chacun individuellement, en 11, entre leurs extrémités, sur une traverse 12, qui leur est commune, et qui est par exemple fixe, sont aptes à appliquer, par l'une de leurs extrémités, des mâchoires de freinage 13, à garnitures de frottement 14, à un quelconque organe à freiner 15, par exemple un disque, et, d'autre part, intervenant à l'autre extrémité de ces bras 10, un vérin 16, dont l'un des éléments constitutifs, corps 17 ou piston 18, est attelé à l'un de ces bras 10 tandis que l'autre est attelé à l'autre de ceux-ci.

En pratique, le corps 17 de ce vérin 16 est articulé, en 20, à l'un des bras 10, et l'autre de ces bras 10 est articulé, en 21, à une tige 22 solidaire de son piston 18.

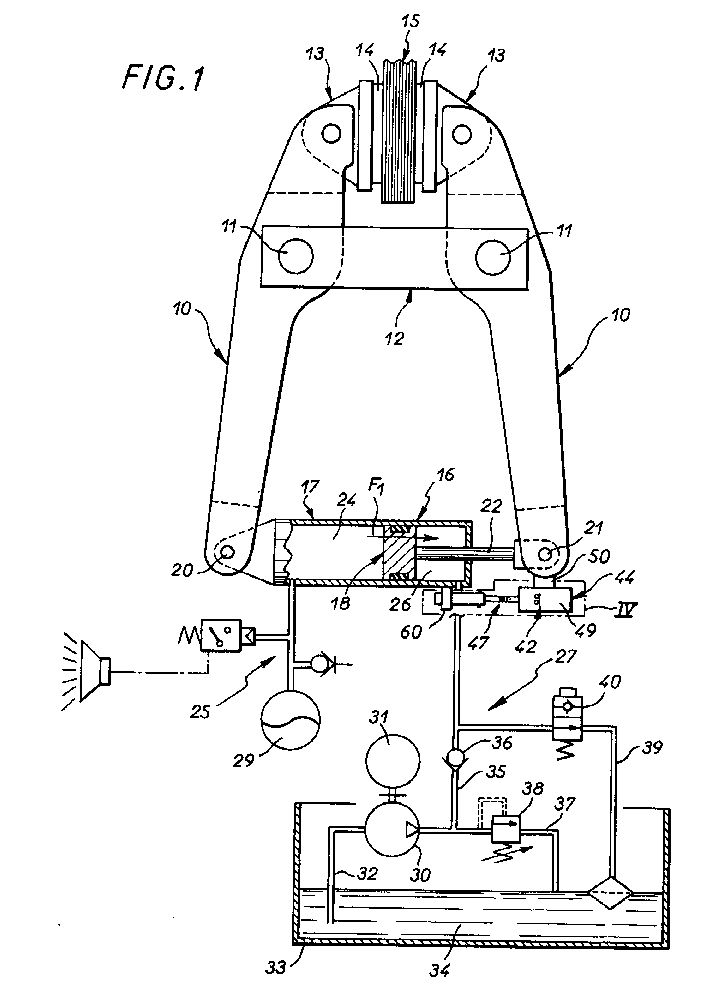

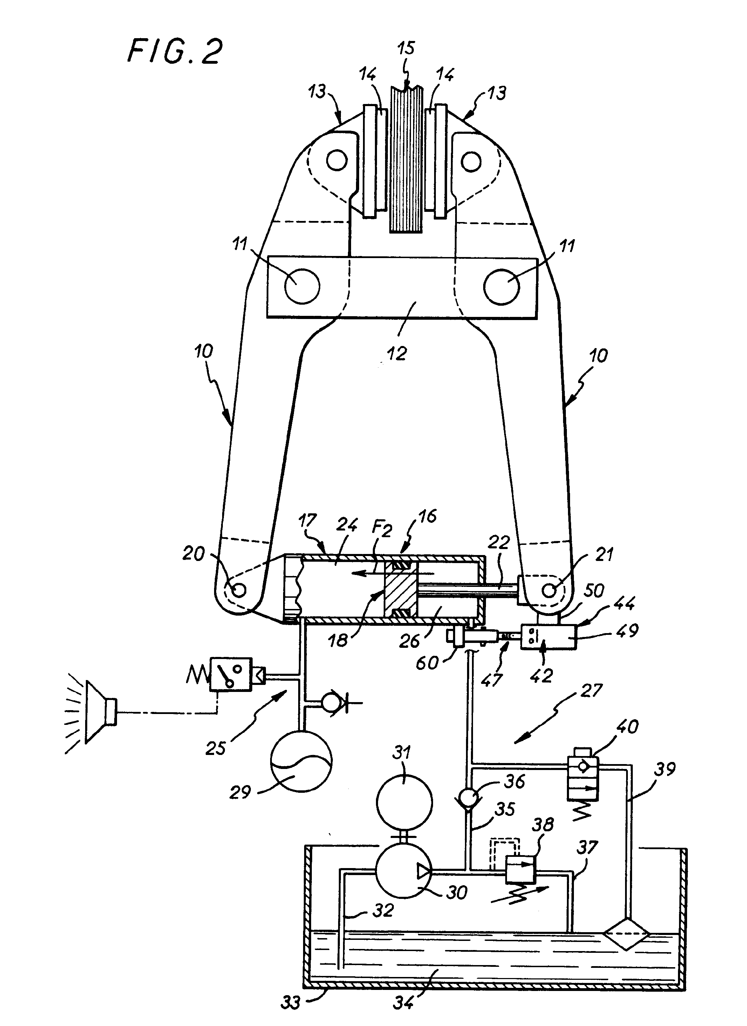

Ce piston 18 sépare en deux chambres étanches le volume intérieur du corps 17, à savoir, du côté opposé à sa tige 22, une chambre 24, avec laquelle se trouvent en liaison des moyens de serrage 25 propres à solliciter le piston 18 dans un sens, tel que repéré par la flèche F1 sur la figure 1 et, du côté de la tige 22, une chambre 26, en liaison avec laquelle se trouvent des moyens de desserrage 27 propres à solliciter ce piston 18 dans le sens opposé au précédent, tel que repéré par la flèche F2 sur la figure 2.

Tel que décrit dans la demande de brevet français No 86 07039 mentionnée ci-dessus, les moyens de serrage 25 comportent, dans la forme de réalisation représentée, un accumulateur hydraupeumatique 29, disposé à l'extérieur du corps 17 du vérin 16.

De même, les moyens de desserrage 27 constituent, de manière connue en soi, dans cette forme de réalisation, un générateur de pression comportant, pour l'alimentation en fluide sous pression de la chambre 26, une pompe 30, qui est commandée par un moteur 31, en pratique un moteur électrique, et dont l'aspiration 32 plonge dans un bac 33 contenant, à un niveau suffisant, le fluide 34 nécessaire, tandis que son refoulement 35, sur lequel est interposé un clapet anti retour 36, est relié à la chambre 26.

Sur ce refoulement 35 sont piqués, en dérivation, d'une part, un premier retour 37, contrôlé par une vanne de sécurité 38, et, d'autre part, un deuxième retour 39, contrôlé par une électrovanne 40.

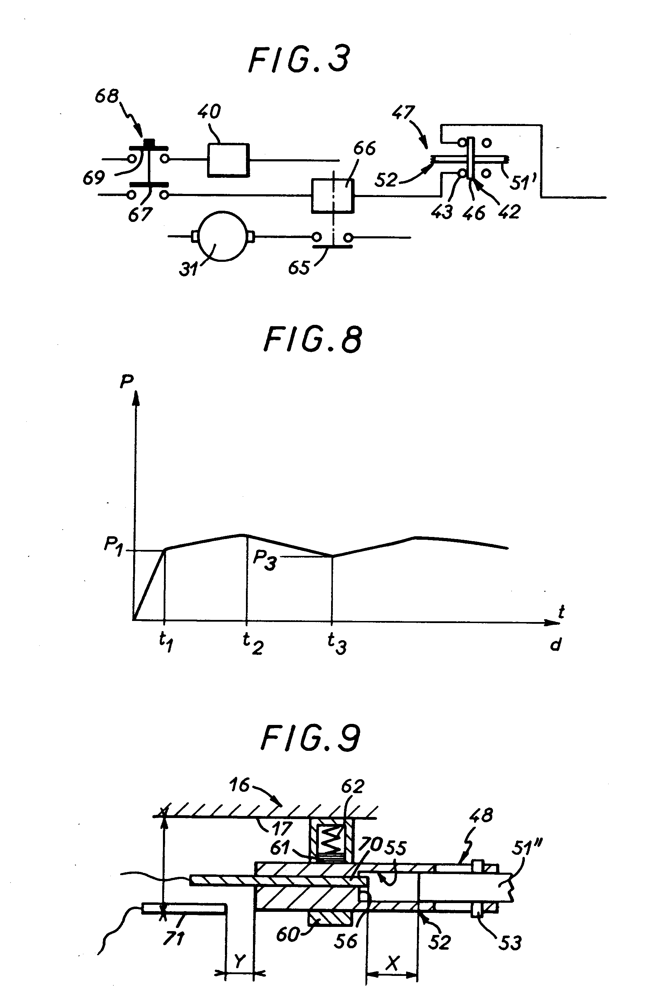

Suivant l'invention, les moyens de desserrage 27 ainsi constitués sont sous le contrôle d'un contacteur électrique 42, figures 3 à 7, dont une partie 43, formée de ses plots, est liée en mouvement, par une liaison en mouvement 44, détaillée ultérieurement, à l'un des éléments 17, 18 constitutifs du vérin 16, tandis que l'autre partie, 46, formant sa lame, est liée en mouvement, par une liaison en mouvement 47, également détaillée ultérieurement, à l'autre de ces éléments 17, 18, avec, intervenant sur la liaison en mouvement 44, 47 d'une de ces parties 43, 46, des moyens de débattement à jeu 48.

En pratique, dans la forme de réalisation représentée, la partie formant plots 43 du contacteur électrique 42 est portée par un boîtier 49, qui, par une patte 50, est solidaire du bras 10 auquel est attelé par une tige 22 le piston 18 du vérin 16, et qui appartient donc à la liaison en mouvement 44 correspondante, et cette partie formant plots 43 est ainsi liée en mouvement de manière positive avec ce piston 18.

Conjointement, la partie formant lame 46 du contacteur électrique 42 est, dans cette forme de réalisation, liée en mouvement au corps 17 du vérin 16 par la liaison en mouvement 47, et celle-ci est celle comportant des moyens de débattement à jeu 48.

En pratique, dans cette forme de réalisation, cette liaison en mouvement 47 est constituée de deux tiges télescopiques 51, 52, dont une, la tige 51, qui est la tige la plus intérieure, porte une goupille 53, et dont l'autre, la tige 52, qui est la tige la plus extérieure, présente une boutonnière 54 avec laquelle est en prise ladite goupille 53.

Ce sont cette goupille 53 et cette boutonnière 54 qui constituent les moyens de débattement à jeu 48.

Soit D1 le débattement de la goupille 53 dans la boutonnière 54.

En pratique, la tige 51 est engagée à coulissement sans frottement dans la tige 52, ou tout au moins, l'effort axial dû à son frottement dans celle-ci est, par construction, très inférieur à l'effort d'inversion du contacteur électrique 42.

Dans la forme de réalisation représentée, la tige 52 présente, pour la tige 51, un logement borgne 55 à fond 56.

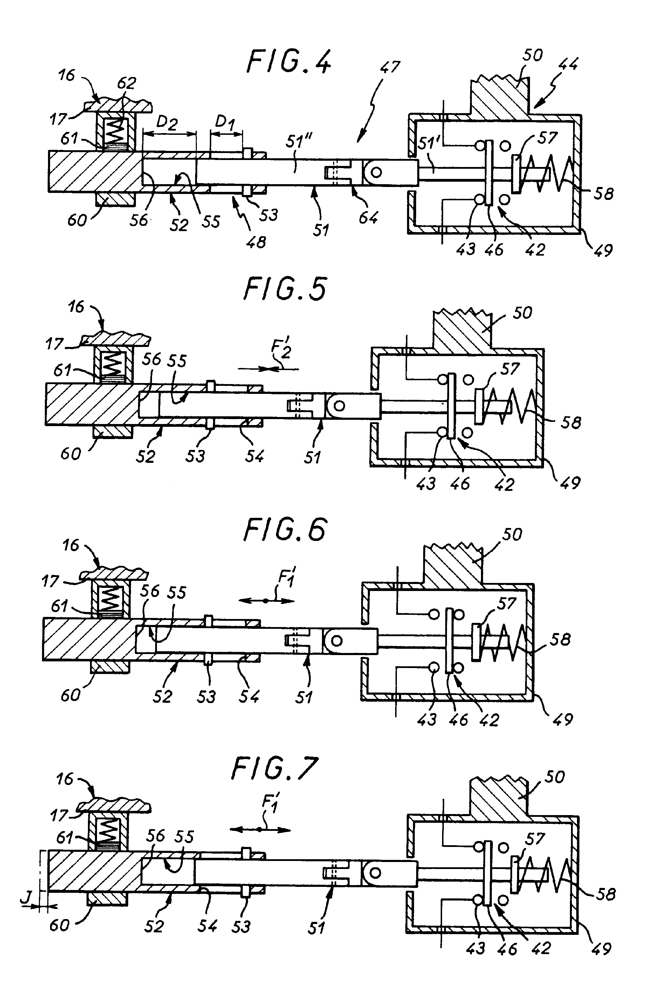

Soit D2 la distance existant entre ce fond 56 et l'extrémité correspondante de la tige 51 lorsque, comme représenté à la figure 4, la goupille 53 est en butée contre l'extrémité de la boutonnière 54 opposée à ce fond 56.

Par construction D2, qui est un invariant, est supérieur à D1.

En pratique, dans la forme de réalisation représentée, la tige 51 est la partie de la liaison en mouvement 47 qui porte la partie formant lame 46 du contacteur électrique 42.

Se prolongeant au-delà de cette partie formant lame 46, elle porte, également, une collerette de butée 57, et, entre celle-ci et le fond du boîtier 49, est interposé un ressort 58, qui sollicite en permanence cette tige 51 en direction de la tige 52, et qui, donc, sollicite en permanence en fermeture le contacteur électrique 42.

Par ailleurs, pour l'une au moins des parties 43 46 du contacteur électrique 42, la liaison en mouvement 44, 47 intervenant entre cette partie 43, 46 et l'élément correspondant 17, 18 du vérin 16 est une liaison à glissement contrôlée par des moyens de frottement.

Dans la forme de réalisation représentée, il en est ainsi pour la seule liaison en mouvement 47 intervenant entre la partie formant lame 46 du contacteur électrique 42 et le corps 17 du vérin 16, et il s'agit donc de la liaison en mouvement comportant les moyens de débattement à jeu 48 précédemment décrits.

En pratique, l'une des tiges télescopiques que comporte cette liaison en mouvement 47, en l'espèce sa tige 52, est, pour ce faire, engagée à coulissement dans un palier 60 solidaire du corps 17 du vérin 16, et les moyens de frottement correspondants comportent, logés dans ce palier 60, un patin 61, que des moyens élastiques 62, en l'espèce un simple ressort, sollicitent en permanence au contact de la tige 52.

Par construction, il est fait en sorte que l'effort dû axialement à ces moyens de frottement soit supérieur à l'effort d'inversion du contacteur électrique 42.

De préférence, et tel que représenté, sur l'une au moins des liaisons en mouvement 44, 47 établies entre les deux parties 43, 46 du contacteur électrique 42 et les éléments 17, 18 constitutifs du vérin 16 interviennent également des moyens de rotule 64.

Dans la forme de réalisation représentée, il en est ainsi pour la seule liaison en mouvement 47, et les moyens de rotule 64 correspondants sont constitués par au moins un cardan interposé sur sa tige 51, entre deux tronçons 51', 51'' constitutifs de cette tige 51.

En pratique, enfin, et tel qu'illustré par le bloc diagramme de la figure 3, l'alimentation du moteur 31 est sous le contrôle, par un contact électrique 65, d'un relais 66 sur le circuit de commande duquel se trouvent insérés, en série, d'une part, le contacteur électrique 42, et, d'autre part, un contact électrique 67 commandé par un bouton poussoir à accrochage 68 à la disposition de l'usager.

Dans la forme de réalisation représentée, ce bouton poussoir à accrochage 68 contrôle conjointement, par un contact 69, l'alimentation de l'électrovanne 40.

Lorsque, tel que représenté sur les figures 1 et 4, le frein suivant l'invention est fermé, c'est-à-dire serré, le contacteur électrique 42 est en position de fermeture, en raison de la sollicitation du ressort 58 auquel il est soumis, et le bouton poussoir à accrochage 68 est, lui, en position d'ouverture.

Le moteur 31 n'étant pas alimenté, la pompe 30 ne tourne pas, et, par l'électrovanne 40, la chambre 26 du vérin 16 est mise en liaison avec le bac 33.

Seuls donc sont effectivement en action, par la chambre 24 du vérin 16, les moyens de serrage 25.

Agissant suivant la flèche F1 de la figure 1 sur le piston 18, ils maintiennent effectivement fermé le frein.

Pour cette position de fermeture du frein, qui correspond à un écartement relatif des bras 10, la goupille 53 des moyens de débattement à jeu 48 est en butée contre l'extrémité de la boutonnière 54 opposée au palier 60, figure 4.

Lorsque le frein doit être ouvert, c'est-à-dire desserré, il suffit d'enfoncer le bouton poussoir à accrochage 68, pour le passage, et le maintien, en position de fermeture, de celui-ci.

Il en résulte, d'une part, par les contacts 67 et 65, l'entrée en action du moteur 31, et donc de la pompe 30, et, d'autre part, par l'électrovanne 40, la mise en cul-de-sac du circuit correspondant, figure 2.

Tel que représenté sur le diagramme de la figure 8, sur lequel il est reporté, en abscisses, le temps t ou le déplacement d du piston 18 du vérin 16, et, en ordonnées, la pression P dans la chambre 26 de ce vérin 16, cette pression P dans cette chambre 26 augmente progressivement, ce qui, au bout d'un temps t correspondant à une pression P1 suffisante pour équilibrer l'effort dû aux moyens de serrage 25, provoque, à son tour, le débit de la pompe 30 se poursuivant, un déplacement progressif, de la droite vers la gauche, suivant la flèche F2 de la figure 2, du piston 18 du vérin 16.

A compter de cet instant t1, et compte tenu du déplacement du piston 18, la pression P dans la chambre 26 du vérin 16 n'augmente plus que faiblement.

En outre, du fait de ce déplacement du piston 18, les bras 10 sont sollicités en rapprochement l'un par rapport à l'autre, et, comme recherché, le frein est commandé en ouverture.

Conjointement, du fait de ce rapprochement relatif des bras 10, les liaisons en mouvement 44, 47 portant les deux parties 43, 46 du contacteur électrique 42 sont elles-mêmes sollicitées en rapprochement.

Autrement dit, suivant la double flèche F'2 de la figure 5, le boîtier 49 et le palier 60 tendent alors à se rapprocher l'un de l'autre.

Mais, du fait des moyens de débattement à jeu 48 que comporte la liaison en mouvement 47, et du fait, également, que, l'effort d'inversion du contacteur électrique 42, contrôlé par le ressort 58, est très supérieur au frottement entre les tiges 51 et 52, il n'en résulte, dans un premier temps, que le seul enfoncement, dans la tige 52, de la tige 51, dans les limites du débattement D1 autorisé par ces moyens de débattement à jeu 48, et, donc, jusqu'à butée de la goupille 53 contre l'extrémité de la boutonnière 54 opposée au boîtier 49, figure 5.

Jusqu'à l'instant t2 correspondant, et tel que représenté à la figure 5, le contacteur électrique 42 reste en position de fermeture, et la pompe 30 reste donc en action.

Le contacteur électrique 42 ne passe qu'ensuite, au temps t2, en position d'ouverture, figure 6.

A partir de cet instant, l'alimentation du moteur 31 est interrompue, et, donc, aussi, l'alimentation en fluide sous pression de la chambre 26 du vérin 16 par la pompe 30.

En raison des inévitables fuites dans le circuit hydraulique auquel elle est reliée, la pression P dans cette chambre 26 commence alors à décroître progressivement.

Lorsqu'elle atteint à nouveau la pression d'équilibre P1, le piston 18 du vérin 16 amorce un déplacement dans le sens opposé au précédent.

Il en résulte, suivant un mouvement inverse du précédent, et tel que repéré par la double flèche F'1 sur la figure 6, un écartement relatif du boîtier 49 par rapport au palier 60 conduisant à un retour en position de fermeture du contacteur électrique 42 sous la sollicitation du ressort 58.

En pratique, ce retour en position de fermeture du contacteur électrique 42 intervient pour une pression de relance P3 qui est très proche de la pression d'équilibre P1, puisqu'elle ne se différencie de celle-ci qu'à raison de la course correspondante, très faible, de la partie formant lame 46 de ce contacteur électrique 42.

Quoi qu'il en soit, à l'instant t3 correspondant, le retour en position de fermeture du contacteur électrique 42 assure la relance du moteur 31, et, donc, par la pompe 30, une remontée de la pression P dans la chambre 26 du vérin 16.

Cette remontée de pression, qui intervient donc au temps t3 amorce un nouveau cycle d'intervention, du type du précédent.

Il y a ainsi systématiquement un maintien ouvert du frein.

Dans ce qui précède, et compte tenu des efforts axiaux en jeu, la tige 52 de la liaison en mouvement 47 ne bouge pas par rapport au palier 60 avec lequel elle est en prise.

Il n'en est pas de même si, le frein étant fermé, figures 1 et 4, les garnitures de frottement 14 portées par les mâchoires de freinage 13 sont l'objet d'une certaine usure, ce qui, en pratique, est quasi inévitablement le cas.

En effet, du fait de cette usure, et sous la sollicitation des moyens de serrage 25, les bras 10 sont l'objet d'un mouvement progressif d'écartement l'un par rapport à l'autre, compensé par un mouvement de la gauche vers la droite, suivant la flèche F1 de la figure 1, du piston 18 du vérin 16.

Il en résulte une sollicitation en écartement du boîtier 49 et du palier 60 l'un par rapport à l'autre, suivant la double flèche F'1 de la figure 7.

Mais, la goupille 53 portée par la tige 51 étant alors en butée sur la droite contre l'extrémité de la boutonnière 54 opposée au palier 60, il en résulte un entraînement de la tige 52 par cette tige 51.

Autrement dit, et tel qu'il ressort du jeu J reporté sur la figure 7, il en résulte, progressivement, un déplacement de la tige 52 par rapport au palier 60 qui l'enserre, et ce déplacement est à l'image de l'usure en cours.

Il y a ainsi avantageusement une compensation systématique de cette usure.

Au desserrage, le frein se retrouve dans la même configuration que celle décrite précédemment.

Il en est de même, au premier serrage, après un changement des garnitures de frottement 14.

Par ailleurs, l'ouverture du frein correspondant au débattement D1 dont dispose la goupille 53 dans la boutonnière 54, il suffit de changer la tige 52 comportant cette boutonnière 54 pour changer, si désiré, la valeur de cette ouverture.

Suivant la variante de réalisation illustrée par la figure 9, entre les tiges 51, 52 constitutives de la liaison en mouvement 47 comportant les moyens de débattement à jeu 48 intervient un détecteur de position 70.

Il est ainsi tiré parti du fait que D2 est un invariant, et donc aussi la distance X séparant, frein fermé, l'extrémité de la tige 51 du fond 56 du logement borgne 55 de la tige 52, pour détecter, par exemple, l'état, ouvert ou fermé, du frein.

Par exemple, et tel que représenté, pour être sensible à la position de la tige 51 dans la tige 52, ce détecteur de position 70 traverse, parallèlement à l'axe de l'ensemble, le fond 56 du logement borgne 55 de la tige 52, en direction de la tige 51.

Suivant cette variante, il est également tiré parti du fait que la tige 52 se déplace dans le palier 60 au fur et à mesure de l'usure des garnitures de frottement 14 des mâchoires de freinage 13 pour indiquer à l'usager, lorsque cela est le cas, que ces garnitures de frottement ont atteint leur limite normale d'usure.

Pour ce faire, il est associé, à cette tige 52, un détecteur de position fixe 71.

Celui-ci est en pratique placé, en regard de l'extrémité de la tige 52, à une distance Y de celle-ci qui diminue au fur et à mesure de l'usure.

Il peut par exemple déclencher une alarme lorsque cette distance Y devient nulle.

Bien entendu, la présente invention ne se limite pas aux formes de réalisation décrites et représentées, mais englobe toute variante d'exécution.

En particulier, pour la constitution du générateur de pression que comportent les moyens de desserrage, il peut tout aussi bien être mis en oeuvre une pompe tournant en permanence.

De même, pour les moyens de serrage, il peut tout aussi bien être mis en oeuvre un ressort mécanique.

## Revendications

1. Frein du genre comportant deux bras (10), qui, montés pivotants, sont aptes à appliquer des mâchoires de freinage (13) à un quelconque organe (15) à freiner, et un vérin (16), dont l'un des éléments constitutifs, corps (17) ou piston (18), est attelé à l'un desdits bras (10) tandis que l'autre est attelé à l'autre de ceux-ci, avec, d'une part, en liaison avec l'une (24) des chambres dudit vérin (16), des moyens de serrage (25) propres à solliciter son piston (18) dans un sens, et, en liaison avec l'autre (26) desdites chambres, des moyens de desserrage (27) propres à solliciter ledit piston (18) dans le sens opposé au précédent, caractérisé en ce que lesdits moyens de desserrage (27) sont sous le contrôle d'un contacteur électrique (42) dont une partie (43) est liée en mouvement à l'un des éléments (17, 18) constitutifs du vérin (16), tandis que l'autre partie (46) est liée en mouvement à l'autre desdits éléments (17, 18), en ce que, sur la liaison en mouvement (47) d'une desdites parties (46) avec l'élément (17) correspondant du vérin (16), interviennent des moyens de débattement à jeu (48), et en ce que la liaison en mouvement (47) sur laquelle interviennent de tels moyens de débattement à jeu (48) est une liaison à glissement contrôlée par des moyens de frottement, cette liaison en mouvement (47) comportant une tige (52) engagée à coulissement dans un palier (60) solidaire de l'élément (17) correspondant du vérin (16).

2. Frein suivant la revendication 1, caractérisé en ce que la liaison en mouvement (47) comportant des moyens de débattement à jeu (48) est constituée de deux tiges télescopiques (51, 52), dont une (51) porte une goupille (53), et dont l'autre (52) présente une boutonnière (54) avec laquelle est en prise ladite goupille (53).

3. Frein suivant la revendication 2, caractérisé en ce que entre les tiges (51, 52) constitutives de la liaison en mouvement (47) comportant des moyens de débattement à jeu (48) intervient un détecteur de position (70).

4. Frein suivant l'une quelconque des revendications 1 à 3, caractérisé en ce que à la tige (52) engagée à coulissement dans un palier (60) est associé un détecteur de position fixe (71).

5. Frein suivant l'une quelconque des revendications 1 à 4, caractérisé en ce que les moyens de frottement contrôlant la liaison en mouvement (47) comportent, logé dans le palier (60), un patin (61) que des moyens élastiques (62) sollicitent en permanence au contact de la tige (52) correspondante.

6. Frein suivant l'une quelconque des revendications 1 à 5, caractérisé en ce que l'effort dû axialement aux moyens de frottement contrôlant la liaison en mouvement (47) est supérieur à l'effort d'inversion du contacteur électrique (42).

7. Frein suivant l'une quelconque des revendications 1 à 6, caractérisé en ce que sur l'une au moins des liaisons en mouvement (44, 47) établies entre les deux parties (43, 46) du contacteur électrique (42) et les éléments (17, 18) constitutifs du vérin (16) interviennent également des moyens de rotule (64).

8. Frein suivant l'une quelconque des revendications 1 à 7, caractérisé en ce que la partie formant plots (43) du contacteur électrique (42) est portée par un boîtier (49) solidaire du bras (10) auquel est attelé par une tige (22) le piston (18) du vérin (16), et elle est ainsi liée en mouvement de manière positive avec ce piston (18), tandis que la partie formant lame (46) de ce contacteur électrique (42) est liée en mouvement au corps (17) de ce vérin (16) par la liaison en mouvement (47) comportant des moyens de débattement à jeu (48).

9. Frein suivant l'une quelconque des revendications 1 à 8, caractérisé en ce que les moyens de desserrage (27) comportant, pour l'alimentation en fluide sous pression de la chambre (26) correspondante du vérin (16), une pompe (30) commandée par un moteur (31), l'alimentation dudit moteur (31) est sous le contrôle d'un relais (66) sur le circuit de commande duquel se trouvent insérés en série, d'une part, le contacteur électrique (42), et, d'autre part, un contact électrique (67) commandé par un bouton poussoir à accrochage (68) à la disposition de l'usager.

## Patentansprüche

1. Bremse, umfassend zwei verschwenkbar montierte Arme (10), die Bremsbacken (13) an ein beliebiges zu bremsendes Organ (15) andrücken können, und eine Kolben-Zylinder-Einheit (16), von der eines der Elemente, Körper (17) oder Kolben (18), mit einem der Arme (10) gekoppelt ist, während das andere mit dem anderen gekoppelt ist, mit einerseits Anzugsmitteln (25), die mit einer (24) der Kammern der Kolben-Zylinder-Einheit (16) in Verbindung sind und ihren Kolben (18) in einer Richtung beaufschlagen können, und Lösemitteln (27), die mit der anderen (26) der Kammern in Verbindung sind und den Kolben (18) in der der vorhergehenden entgegengesetzten Richtung beaufschlagen können, dadurch gekennzeichnet, daß die Lösemittel (27) unter der Steuerung eines elektrischen Kontaktgebers (42) sind, von dem ein Teil (43) bezüglich Bewegung mit einem der Elemente (17, 18) der Kolben-Zylinder-Einheit (16) verbunden ist, während der andere Teil (46) bezüglich Bewegung mit dem anderen Element (17, 18) verbunden ist, daß in der Verbindung bezüglich Bewegung (47) eines der Teile (46) mit dem entsprechenden Element (17) der Kolben-Zylinder-Einheit (16) Ausschlagsmittel (48) mit Spiel vorgesehen sind und daß die Verbindung,(47) bezüglich Bewegung, in der solche Ausschlagsmittel (48) mit Spiel vorgesehen sind, eine durch Reibmittel gesteuerte Gleitverbindung ist und eine Stange (52) umfaßt, die verschiebbar in einem mit dem entsprechenden Element (17) der Kolben-Zylinder-Einheit (16) fest verbundenen Lager (60) sitzt.

2. Bremse nach Anspruch 1, dadurch gekennzeichnet, daß die Ausschlagsmittel (48) mit Spiel umfassende Verbindung (47) bezüglich Bewegung aus zwei teleskopischen Stangen (51, 52) besteht, deren eine (51) einen Stift (53) trägt und deren andere (52) ein Langloch (54) aufweist, mit dem der Stift (53) in Eingriff ist.

3. Bremse nach Anspruch 2, dadurch gekennzeichnet, daß zwischen den Stangen (51, 52), die die Ausschlagmittel (48) mit Spiel umfassende Verbindung (47) bezüglich Bewegung bilden, ein Stellungsfühler (70) vorgesehen ist.

4. Bremse nach einem der Ansprüche 1 bis 3, dadurch gekennzeichnet, daß der verschiebbar in einem Lager (60) sitzenden Stange (52) ein feststehender Stellungsfühler (71) zugeordnet ist.

5. Bremse nach einem der Ansprüche 1 bis 4, dadurch gekennzeichnet, daß die die Verbindung (47) bezüglich Bewegung steuernden Reibmittel eine Kufe (61) umfassen, die in dem Lager (60) sitzt und die elastische Mittel (62) ständig in Kontakt mit der entsprechenden Stange (52) beaufschlagen.

6. Bremse nach einem der Ansprüche 1 bis 5, dadurch gekennzeichnet, daß die Kraft, die axial durch die die Verbindung (47) bezüglich Bewegung steuernden Reibmittel erzeugt wird, größer als die Umkehrkraft des elektrischen Kontaktgebers (42) ist.

7. Bremse nach einem der Ansprüche 1 bis 6, dadurch gekennzeichnet, daß auf wenigstens einer der Verbindungen (44, 47) bezüglich Bewegung, die zwischen den beiden Teilen (43, 46) des elektrischen Kontaktgebers (42) und den Elementen (17, 18) der Kolben-Zylinder-Einheit (16) vorgesehen sind, auch Kugelgelenkmittel (64) vorgesehen sind.

8. Bremse nach einem der Ansprüche 1 bis 7, dadurch gekennzeichnet, daß der Kontakte (43) bildende Teil des elektrischen Kontaktgebers (42) von einem Gehäuse (49) getragen ist, das mit dem Arm (10) fest verbunden ist, mit dem über eine Stange (22) der Kolben (18) der Kolben-Zylinder-Einheit (16) gekoppelt ist, und auf diese Weise bezüglich Bewegung positiv mit diesem Kolben (18) verbunden ist, während der ein Blatt (46) bildende Teil dieses elektrischen Kontaktgebers (42) bezüglich Bewegung mit dem Körper (17) dieser Kolben-Zylinder-Einheit (16) durch eine Ausschlagmittel (48) mit Spiel aufweisende Verbindung (47) bezüglich Bewegung verbunden ist.

9. Bremse nach einem der Ansprüche 1 bis 8, dadurch gekennzeichnet, daß, indem die Lösemittel (27) für die Speisung der entsprechenden Kammer (26) der Kolben-Zylinder-Einheit (16) mit Druckfluid eine durch einen Motor (31) betätigte Pumpe (30) umfassen, die Speisung dieses Motors (31) unter der Steuerung eines Relais (66) ist, in dessen Steuerkreis in Reihe einerseits der elektrische Kontaktgeber (42) und andererseits ein elektrischer Kontakt (67) eingesetzt ist, der durch einen dem Benutzer zur Verfügung stehenden Druckknopf (68) mit Einhakung gesteuert ist.

## Claims

1. A brake of the kind comprising two arms (10) which are mounted pivotably to apply brake pads (13) to any member (15) to be braked, and a jack actuator (16) of which one of the components, being the body (17) or the piston (18), is coupled to one of said arms (10) while the other is coupled to the other of said arms, with, on the one hand, in communication with one (24) of the chambers of said actuator (16) brake applicator means (25) for urging its piston (18) in one direction and, in communication with the other (26) of said chambers, brake release means (27) for urging said piston (18) in the opposite direction to the preceding direction, characterised in that said brake release means (27) are under the control of an electrical switch (42) of which one part (43) is connected to one of the components (17, 18) of the actuator (16) for movement therewith while the other part (46) is connected to the other of said components (17, 18) for movement therewith, that included in the connection (47) of one of said parts (46) to the corresponding component (17) of the actuator (16) are lost-motion means (48) and that the connection (47) which includes said lost-motion means (48) is a sliding connection controlled by friction means, said connection (47) comprising a rod (52) slidably engaged in a bearing (60) fixed to the corresponding component (17) of the actuator (16).

2. A brake according to claim 1 characterised in that the connection (47) comprising lost-motion means (48) is formed by two telescopic rods (51, 52) of which one (51) carries a pin (53) and the other (52) has a slot (54) with which said pin (53) is engaged.

3. A brake according to claim 2 characterised in that a position detector (70) is disposed between the rods (51, 52) constituting the connection (47) comprising lost-motion means (48).

4. A brake according to any one of claims 1 to 3 characterised in that a fixed position detector (71) is associated with the rod (52) slidably engaged in a bearing (60).

5. A brake according to any one of claims 1 to 4 characterised in that the friction means for controlling the connection (47) comprise a pad (61) which is accommodate in the bearing (60) and which is permanently urged by resilient means (62) into contact with the corresponding rod (52).

6. A brake according to any one of claims 1 to 5 characterised in that the force due axially to the friction means for controlling the connection (47) is greater than the force for switching over the electrical switch (42).

7. A brake according to any one of claims 1 to 6 characterised in that one at least of the connections (44, 47) between the two parts (43, 46) of the electrical switch (42) and the components (17,18) of the actuator (16) also includes ball-joint means (64).

8. A brake according to any one of claims 1 to 7 characterised in that the part forming contact studs (43) of the electrical switch (42) is carried by a casing (49) fixed to the arm (10) to which the piston (18) of the actuator (16) is coupled by a rod (22), and it is thus connected positively for movement with said piston (18) while the part forming the movable blade (46) of said electrical switch (42) is connected for movement with the body (17) of said actuator (16) by the connection (47) comprising lost-motion means (48).

9. A brake according to any one of claims 1 to 8 characterised in that, the brake release means (27) comprising a pump (30) operated by a motor (31) for supplying fluid under pressure to the corresponding chamber (26) of the actuator (16), the feed for said motor (31) is under the control of a relay (66), the control circuit of which includes in series on the one hand the electrical switch (42) and on the other hand an electrical contact (67) operated by a latching pushbutton (68) available to the user.
